**Europäisches Patentamt**

**European Patent Office**

**Office européen des brevets**

(19)

(11) Numéro de publication : **0 502 071 B1**

(12)

# FASCICULE DE BREVET EUROPEEN

(45) Date de publication du fascicule du brevet :
07.09.94 Bulletin 94/36

(21) Numéro de dépôt : **91900038.0**

(22) Date de dépôt : **23.11.90**

(86) Numéro de dépôt international :
**PCT/FR90/00844**

(87) Numéro de publication internationale :
**WO 91/08456 13.06.91 Gazette 91/13**

(51) Int. Cl.⁵ : **G01L 1/00,** G01N 29/00,
G01H 5/00

(54) **APPAREIL DE CONTROLE PAR ULTRASONS DU SERRAGE D'UNE PIECE.**

(30) Priorité : **24.11.89 FR 8915461**

(43) Date de publication de la demande :
**09.09.92 Bulletin 92/37**

(45) Mention de la délivrance du brevet :
**07.09.94 Bulletin 94/36**

(84) Etats contractants désignés :
**AT BE CH DE DK ES FR GB GR IT LI LU NL SE**

(56) Documents cités :
**EP-A- 0 109 129**
**EP-A- 0 164 808**
**US-A- 4 294 122**
**US-A- 4 471 657**
**Patent Abstracts of Japan, vol. 12, no. 12**
**(P-655)(2359), 14 janvier 1988 & JP-A-62170830**

(56) Documents cités :
**Mécanique, Matériaux, Electricité, no. 400,**
**juin 1983 (Paris, FR), M. Sorel et al.: "Pour un**
**serrage de précision utilisez les ultrasons",**
**pages 29-33**
**IEEE Transactions on Industry Applications,**
**vol. IA-23, no. 4, juillet/août 1987, IEEE (New**
**York, US), B.J. Steblay: "New instrumentation**
**for roof bolt load measurement", pages**
**731-735**

(73) Titulaire : **CENTRE TECHNIQUE DES**
**INDUSTRIES MECANIQUES**
**52, avenue Félix-Louat**
**B.P. 67**
**F-60304 Senlis Cédex (FR)**

(72) Inventeur : **FLAMBARD, Christian**
**18, chemin du Moulin**
**F-60305 Aumont (FR)**

(74) Mandataire : **Bertrand, Didier et al**
**c/o S.A. FEDIT-LORIOT & AUTRES**
**CONSEILS EN PROPRIETE INDUSTRIELLE**
**38, Avenue Hoche**
**F-75008 Paris (FR)**

Jouve, 18, rue Saint-Denis, 75001 PARIS

## Description

L'invention concerne un appareil de contrôle de serrage d'une pièce par ultrasons, du type comportant :

des moyens pour émettre des impulsions dans ladite pièce;

des moyens pour recueillir des signaux en retour;

des moyens de mesure du temps d'apparition d'au moins un desdits signaux en retour par rapport à un événement antérieur;

des moyens de calcul pour en déduire la valeur de serrage de la pièce.

Un appareil de ce type est déjà connu, par exemple, par le bulletin d'Informations du CETIM, N° 99, de février 1987, auquel on pourra se référer pour comprendre l'arrière-plan technique de l'invention.

On rappellera cependant le principe de la méthode de contrôle par ultrasons.

La méthode consiste à émettre dans la pièce (vis, goujon, boulon, etc.) une onde ultrasonore sous forme d'une brève impulsion par l'intermédiaire d'un capteur piézo-électrique placé sur l'une de ses extrémités libres; l'onde réfléchie sur la face opposée est recueillie en retour. La mesure de l'effort dû au serrage est fondée sur la variation du temps de parcours de l'écho au sein de la pièce.

La variation du temps de propagation de l'onde s'exprime par T-To, où To désigne le temps de parcours de l'onde avant le serrage, et T le temps de parcours, au cours du serrage ou après le serrage, qui augmente.

La variation T-To est due, sous l'effort de traction dans le corps de la pièce, à l'effet cumulé :

. de l'allongement de la vis,

. de la diminution de la vitesse de propagation des ondes ultrasonores sous l'effet de la contrainte axiale.

Dans le domaine de déformation élastique du matériau, la variation T-To est proportionnelle à la force introduite dans l'axe du corps de la pièce :

$$F = K(T - To)$$

Le coefficient K dépend de la géométrie de l'assemblage, et du matériau constituant l'élément d'assemblage.

Cette technique implique une mesure très précise du temps; celle-ci doit être réalisée à une ou quelques nanosecondes près.

Pour des raisons d'atténuation de l'onde dans les matériaux et de fragilité du capteur émetteur-récepteur, le choix de la fréquence de l'onde ultrasonore est limité.

D'une façon pratique, la fréquence est limitée à environ 10 MHz, cette limite n'étant donnée qu'à titre indicatif et pour fixer les idées.

A cette fréquence, la période, c'est-à-dire le temps que dure une oscillation de l'onde, est égale à l'inverse de la fréquence, soit $10^{-7}$ secondes, c'est-à-dire 100 nanosecondes.

On constate dans ce cas que si on limite l'onde émise à une ou quelques oscillations, celle-ci constitue un événement dans le temps, très long (100 ou plusieurs fois 100 nanosecondes) devant le temps qui doit être mesuré (1 à quelques nanosecondes).

Dans la méthode, la mesure de temps implique de situer l'écho (ou l'onde ultrasonore) dans l'échelle des temps avant, au cours ou après le serrage. Pour situer précisément cet écho, il est nécessaire de définir sur celui-ci un point de repérage. Ceci constitue la difficulté majeure de l'opération compte tenu du fait que l'écho au cours du serrage ou en cas de modification des moyens de mesure (capteur, électronique, câbles de raccordement) peut subir une déformation importante, ce qui peut entraîner une détérioration de la qualité de la mesure, ou la rendre impossible.

Actuellement, on utilise couramment deux façons de repérer l'écho dans l'échelle des temps : une méthode par seuil, et une méthode par passage à zéro ("zéro crossing").

Selon la première méthode, on choisit un point sur l'écho sur l'une de ses arches, par exemple en définissant un seuil d'amplitude donné qui fixera un point sur un front montant ou descendant d'une des arches de l'oscillation (la première d'amplitude importante par exemple).

Cette technique présente un avantage important; faisant appel à une méthode de détection analogique, elle est très rapide et l'événement peut être pris en compte d'une façon quasi instantanée. La mesure dans ce cas peut être réalisée et reproduite un très grand nombre de fois par seconde (100, 1000, 10000 fois par seconde par exemple).

Selon la seconde méthode, on choisit le point de passage à zéro d'une oscillation : l'oscillation étant constituée d'une arche positive suivie ou précédée d'une arche négative, dans cette oscillation le point de passage à zéro constitue un point intéressant pour repérer l'ensemble.

Cette technique oblige "à reconnaître" l'oscillation pour identifier le passage à zéro; ceci est réalisé par exemple en échantillonnant un certain nombre de points du signal (en relevant l'amplitude du signal à des intervalles de temps régulier et en mémorisant ces données).

Cette opération demande un temps donné pour être réalisée, ce qui limite la cadence pour la reproduire (aujourd'hui l'optimum de cette cadence est de l'ordre de la seconde ou de la fraction de seconde).

Les appareils existants qui emploient l'une ou l'autre méthode peuvent donner satisfaction dans certains cas, mais il apparaît en pratique que ces mesures ainsi effectuées sont souvent entachées d'erreurs qui peuvent être considérables.

Le but de l'invention est de proposer un appareil qui permette des contrôles de serrage beaucoup plus exacts que ceux qui étaient possibles jusque là.

L'invention atteint son but dans le cadre d'un appareil de contrôle du type cité en tête de ce mémoire, par le fait que

. les moyens de mesure comportent des moyens de repérage d'un premier et d'un second écho en retour,

. des moyens d'échantillonnage desdits échos, et des moyens d'intercorrélation entre lesdits premier et second écho, pour servir de base au calcul de la valeur du serrage de la pièce.

Comme cela sera expliqué en détail plus loin, il est ainsi possible d'atteindre un niveau de précision plus élevé qu'auparavant et de surmonter les difficultés de mesure liées à certaines configurations de pièce.

Il est avantageux que les moyens de mesure comportent également des moyens classiques de repérage d'écho à comparaison de seuil, c'est-à-dire que l'appareil regroupe dans un ensemble unique, plusieurs possibilités de mesure, pour pouvoir profiter de celles qui sont le mieux adaptées à chaque situation.

Ainsi, selon la méthode de mesure conforme à l'invention, au lieu de retenir un point de repère sur l'écho, comme précédemment, on en retient un très grand nombre : le signal complet est échantillonné, tous les points sont repérés dans l'échelle des temps.

Au cours ou après le serrage, l'écho se déplace. Celui-ci est à nouveau échantillonné.

Pour faire la mesure du temps, l'ensemble des points mémorisés initialement sont décalés globalement dans le temps en cherchant à superposer au mieux le signal de départ avec le nouveau signal.

Cette opération est connue sous l'appellation d'intercorrélation : la fonction d'intercorrélation passe par un maximum lorsque la superposition est optimale.

Ayant atteint la superposition du signal de référence avec le signal mesuré, il est possible de compter le décalage total de temps nécessaire pour l'opération.

Si l'on considère une arche complète d'une oscillation de l'onde à la fréquence de 10 MHz (10 millions de hertz), il y correspond un signal de 100 nanosecondes.

En supposant que l'on souhaite échantillonner ce signal en 100 points (toutes les nanosecondes, par exemple), il est nécessaire de réaliser le prélèvement des données à la fréquence de 1/nanoseconde soit $10^{+9}$ hertz ou encore un gigahertz (un milliard de hertz), ce qui n'est ni raisonnable ni possible actuellement.

Il est donc avantageux que l'échantillonnage fasse appel à une procédure particulière :

L'émission étant répétée un grand nombre de fois par seconde, et les phénomènes de propagation dans la matière étant considéré comme repétitifs, il est possible de faire appel à une solution consistant à numériser le signal avec un intervalle de temps important compatible avec l'électronique (par exemple intervalle de temps de l'ordre de 20 à 30 nanosecondes) puis à l'émission suivante de décaler cette numérisation à l'aide d'une ligne à retard commandant les moyens d'échantillonnage.

Selon l'invention, la détermination de la variation de temps de parcours dans la vis lorsque celle-ci n'est pas serrée, puis lorsqu'elle est sous tension, peut être effectuée de manières différentes selon des modes dits "relatif" ou "absolu".

Selon le premier mode de serrage, dit relatif, la mesure est effectuée en situant précisément l'écho en retour dans le temps avant le serrage, puis en relevant son déplacement dans le temps par rapport à cette position lors du serrage. La variation du temps de parcours au cours du serrage est mesurée par rapport à la position d'origine de l'écho avant serrage.

Ce mode permet de suivre le serrage en continu; il présente l'avantage :

. d'éliminer en grande partie l'influence des variations de température dont dépend la vitesse de propagation des ondes;

. d'éliminer en grande partie les effets néfastes dûs aux éventuelles variations du couplage acoustique entre le capteur et la vis;

. de ne pas avoir à connaître avec précision la longueur initiale de la vis.

Selon le second mode, dit absolu, la mesure est effectuée en relevant le temps total mis par l'onde pour parcourir un aller et retour dans la pièce.

Deux possibilités sont offertes. Selon une première, qu'on appellera "mode absolu simple", on mesure le temps du premier aller et retour en prenant comme origine des temps l'instant où l'impulsion est émise au départ par le capteur.

Dans ce cas, le temps est la somme du temps aller et retour dans la vis, du temps de passage de l'onde aller et retour dans le milieu de couplage séparant le capteur de l'extrémité de la pièce et du temps de transfert des impulsions électriques dans le câble de liaison entre le capteur et l'électronique de mesure.

Pour chaque vis, le temps initial To correspondant au parcours de l'onde lorsque la vis n'est pas encore serrée doit être mesuré et mis en mémoire. Ce temps To servira de référence et permettra, lorsque la vis est mise sous tension, de définir la variation T-To.

Selon la seconde possibilité, qu'on appellera "mode absolu différentiel", on mesure le temps du deuxième aller et retour et le second.

Dans ce cas, le temps est juste égal au temps d'un aller et retour dans la vis. Ce mode permet d'éliminer l'influence éventuelle due à la traversée de l'onde dans le milieu de couplage séparant le capteur de l'extrémité de la vis, ainsi que du temps de transfert des impulsions électriques dans le câble de liaison du capteur à l'électronique de mesure.

Comme pour le mode absolu simple, le temps initial To correspondant au parcours de l'onde lorsque la vis n'est pas encore serrée doit être mesuré et mis en mémoire pour suivre la variation de temps T-To lorsque la vis est mise sous tension.

Si l'on examine le besoin industriel, on s'aperçoit que les moyens de serrage sont divers; certains fonctionnent par torsion sur l'écrou ou la tête de la vis en mesurant le couple appliqué et l'angle de rotation; d'autres sont conçus pour appliquer une traction sur la vis en mesurant l'allongement, dans ce dernier cas l'écrou est positionné et accosté à la main pour un allongement judicieusement choisi afin d'obtenir la valeur voulue lorsque la vis est relâchée.

Dans les deux cas, le suivi de la mesure de la tension introduite dans la vis est difficile.

Dans le cas du serrage au couple et à l'angle, il est démontré que les effets de la lubrification des pièces en contact, des états de surface, des écarts de géométrie et de forme, entraînent une incertitude et une erreur très importante sur la force appliquée.

Dans le cas du serrage par traction, la mesure de l'allongement nécessite une instrumentation délicate. Actuellement, la vis est forée en son centre sur toute sa longueur afin de recevoir une pige qui, fixée à la vis à une extrémité et libre à l'autre, permettra la mesure de l'allongement relatif de la vis.

En outre, ces méthodes ne permettent pas une fois l'opération terminée de revenir sur chaque vis pour en contrôler l'état de contrainte et d'y apporter éventuellement une correction :

. La mesure d'un couple n'est pas suffisante pour connaître précisément la contrainte d'une vis déjà serrée.

. La mesure d'allongement ayant été réalisée "relativement" ne permet pas de mémoriser une valeur de référence à partir de laquelle l'opération pourrait être reprise.

La particularité du dispositif de l'invention est qu'il permet, par une combinaison avantageuse, des modes de mesure relatif et absolu, simple ou différentiel, du repérage de l'écho par seuil, passage à zéro, et échantillonnage complet du signal, afin de réaliser la mesure du temps To dans la vis non serrée et/ou de ses variations T - To pendant ou après le serrage. Cette combinaison est judicieusement retenue afin de permettre le suivi du serrage avec une grande dynamique ou l'expertise précise à posteriori dans une vis.

Le dispositif se présente comme une voie de mesure organisée pour effectuer la mesure selon les trois modes "relatif" "absolu simple" et "absolu différentiel".

D'autres caractéristiques et avantages de l'invention ressortiront à la lecture de la description qui va suivre d'un mode préféré de réalisation. Il sera fait référence aux dessins annnexés, sur lesquels :

- la figure 1 est un schéma logique de l'appareil conforme à l'invention.
- La figure 2 est un diagramme des temps d'une opération de détection par seuil.
- La figure 3 est un diagramme des temps d'une opération de détection par passage à zéro.
- Les figures 4A et 4B sont les diagrammes des temps d'une opération d'échantillonnage d'un premier et d'un second écho respectivement.
- Les figures 5A et 5B sont des diagrammes du temps montrant le principe de l'échantillonnage à l'aide d'une ligne à retard.
- Les figures 6A et 6B représentent une onde respectivement avant serrage, puis, déformée, pendant ou après serrage; les figures 6C et 6D représentent de même une onde différemment déformée avant et pendant ou après serrage.
- Les figures 7A et 7B représentent un exemple de signal accompagné de beaucoup de bruit, respectivement avant et pendant ou après serrage.
- Les figures 8A et 8B d'une part, 8C, 8D d'autre part, représentent pour deux configurations, la vis représentée en 8A et 8C, les échogrammes 8B et 8D obtenus.
- La figure 9 montre, sur un échogramme, un exemple d'affaiblissement entre deux échos successifs C et Q.
- La figure 10 montre sur un échogramme un exemple d'échos distincts correspondant à des ondes longitudinales et à des ondes transversales.

## A) Description de l'appareil

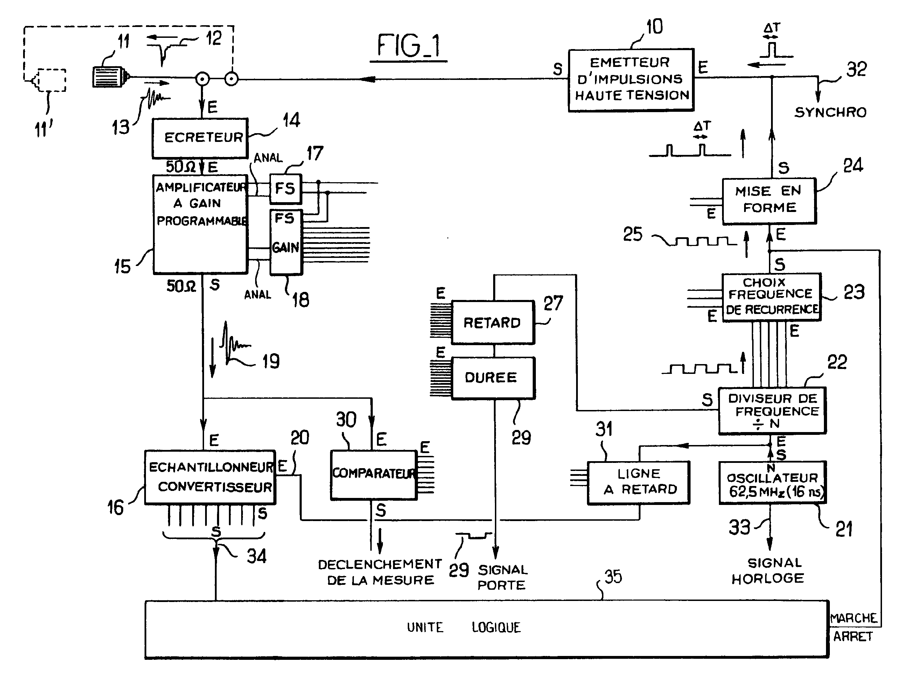

L'ensemble de l'appareil conforme à l'invention va être décrit en référence avec la figure 1.

L'appareil peut être décomposé en plusieurs sous-ensembles.

### 1. Emission et réception des échos.

Le sous-ensemble comprend essentiellement, un étage d'émission et un étage de réception.

Dans le premier, un émetteur 10 d'impulsions de sortie de haute-tension (par exemple 300 V), reçoit des créneaux $\Delta T$ en provenance d'un bloc de mise en forme 24, et envoie des signaux haute-tension 12 vers le transducteur 11.

En trait plein, on a représenté un transducteur 11 émetteur-récepteur. Cependant, on pourrait prévoir, comme représenté en pointillés, un transducteur 11' d'émission dintinct du transducteur de réception 11.

L'étage de réception des signaux 13 (échos) recueillis en retour comporte un écrêteur 14, un amplificateur 15 et un échantillonneur-convertisseur 16.

L'écrêteur 14 assure la protection de l'amplificateur 15 contre les impulsions de haute tension en les ecrêtant à une valeur acceptable.

L'amplificateur 15 comporte une fonction d'adaptation d'impédance pour la fréquence du capteur considéré, laquelle fréquence (par exemple 2,5;5;10 ou 15 MHz) peut être programmée par une entrée 17 à deux bits. D'autre part, le gain d'amplification est programmable à l'aide d'une entrée 18 à 8 bits.

Le signal amplifié 19 issu de l'étage d'amplification attaque l'échantillonneur bloqueur 16 qui prend sur un ordre extérieur introduit par la ligne 20, la valeur du signal au moment considéré. Cette valeur, convertie sous forme d'un signal numérique 34, est tenue à disposition pour être utilisée dans une unité logique 35.

### 2. Comande des impulsions

Les signaux sont émis en permanence à une cadence donnée, au moyen d'un circuit de commande comprenant un oscillateur 21, un diviseur de fréquence 22, un étage de sélection de fréquence 23 et un étage de mise en forme de signal 24.

L'oscillateur 21 à haute fréquence, par exemple 62,5 MHz (correspondant à une période de 16 ns) est utilisé d'une part pour une ligne de signal d'horloge de référence 33 et d'autre part pour délivrer un signal de fréquence au diviseur 22 qui permet de créer des signaux de fréquences adaptées, par exemple 0,5;1;2,25;5 et 10 kHz, que l'étage suivant 23 permet de choisir, grâce à une entrée de sélection à 3 bits.

Le signal carré choisi 25 est envoyé dans l'étage 24 de mise en forme, et transformé en crénaux d'impulsions de durée $\Delta T$ donnée programmable grâce à une entrée à deux bits.

Les impulsions de durée $\Delta T$ alimentent l'entrée de l'émetteur 10, d'une part, et peuvent alimenter une ligne de synchronisation 32, d'autre part.

### 3. Sélection de l'écho analysé.

L'échogramme observé en retour est généralement complexe et comprend souvent non seulement les différents échos directs en retour, mais aussi des échos parasites réfléchis par des rebords ou les parois de la pièce.

Il est donc judicieux de ne faire d'analyse du signal que sur une portion de l'échogramme où se trouve l'écho utile pour la mesure. On définit dans l'échelle des temps la partie où l'analyse est réalisée : cette partie constitue le "créneau de sélection" ou "porte de mesure".

A cet effet, le circuit de sélection de porte de mesure comporte, en dérivation du diviseur de fréquence 22, deux compteurs programmables 27 et 28, le premier 27 pour définir le début du créneau de sélection (retard) et le second 28 pour définir la durée du créneau de sélection. Les deux compteurs 27 et 28, programmables à l'aide d'une entrée à 16 bits, permettent d'ajuster un signal de porte 29 fixant la position et la durée du créneau dans le temps judicieusement pour chaque type de problème.

### 4. Détection du signal par seuil.

Ayant défini une fenêtre d'observation dans le temps, il est possible de détecter dans celle-ci la position du premier écho dont l'amplitude dépasse un seuil donné.

A cette fin, le signal 19 issu de l'amplificateur 15 est injecté dans un étage comparateur 30 qui compare le signal 19 à un signal de référence de niveau donné programmable grâce à une entrée de réglage de seuil à 8 bits.

Lorsque le signal dépasse la référence, un signal de déclenchement est émis.

### 5. Synchronisation retardée.

L'échantillonnage du signal en temps réel n'est pas aisé; par exemple, si l'on souhaite décrire celui-ci en saisissant une valeur de l'amplitude de toutes les nanosecondes ($10^{-9}$s), il est nécessaire de travailler à une fréquence de $10^9$, soit un gigahertz.

On procède donc autrement.

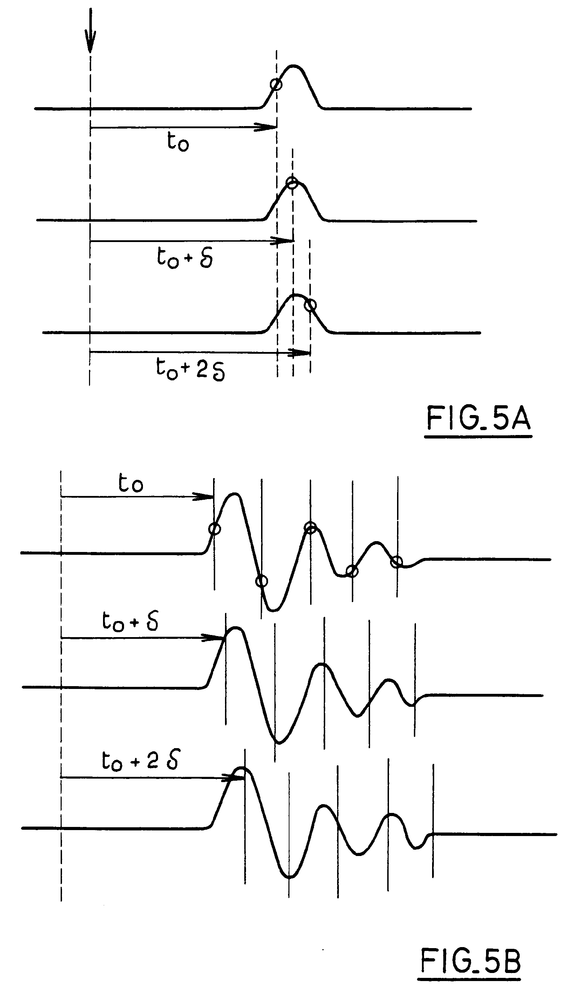

Comme le signal se répète continuellement à cadence donnée dans le temps, il est possible de saisir l'échantillon :
- à un instant donné to (par rapport à la synchronisation),
- à la récurrence suivante à l'instant to + $\delta$,
- à la récurrence d'après, à l'instant to + 2$\delta$ , et ainsi de suite, jusqu'à ce qu'on ait saisi l'ensemble du signal. C'est ce qui est représenté sur la figure 5A, où l'on voit le même signal à trois récurrences successives, une seule mesure étant faite lors de chaque récurrence.

Cette fonction pouvant être assez longue, il est possible de saisir non pas un point à chaque fois mais plusieurs points. C'est ce qui est représenté sur la figure 5B, où à chacune des trois récurrences successives, on mesure cinq points (par exemple) du signal. L'ensemble du signal est ainsi échantillonné plus rapidement.

Cette fonction de retard est assurée par une ligne à retard 31 programmable, qui reçoit les impulsions provenant de l'oscillateur 21 et délivre ces impulsions avec un retard programmable grâce à une entrée à 4 bits, allant par exemple de 1 à 16 nanosecondes, par bonds de 1 nanoseconde.

Le signal de déclenchement de mesure est envoyé sur l'entrée 20 de l'échantillonneur 16.

### B) Fonctionnement de l'appareil

Comme on l'a expliqué déjà, l'appareil est prévu pour pouvoir fonctionner au choix en mode de serrage relatif, en mode de serrage absolu simple ou en mode de serrage absolu différentiel.

### 1. Mode de serrage relatif.

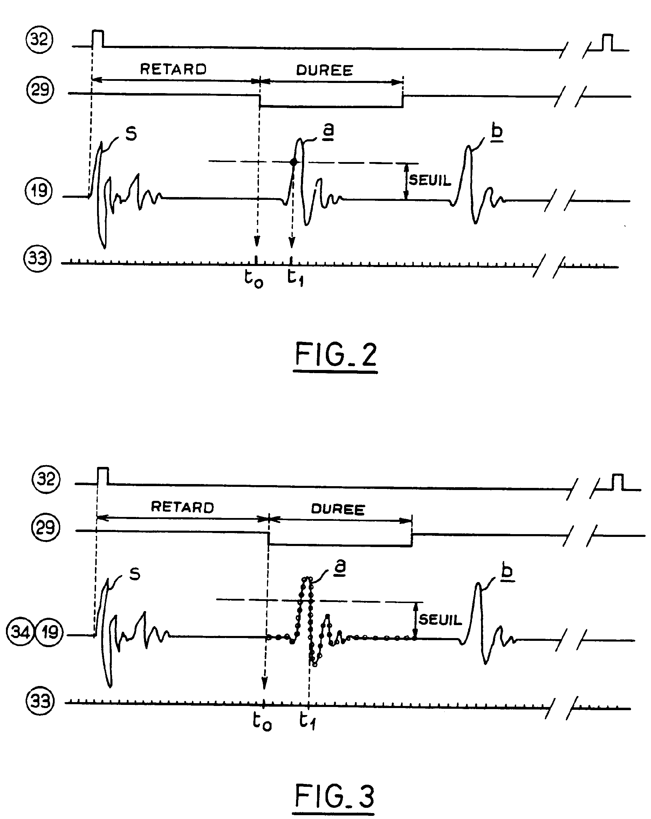

Ce mode est illustré en référence au chronogramme de la figure 2, où les axes des temps représentent, en parallèle, les signaux de synchronisation recueillis sur la ligne 32, les signaux 29 de définition de la porte de mesure, le signal 19 détecté, et le signal d'horloge sur la ligne 33.

Le signal 29 de porte de mesure est défini grâce aux compteurs 27 et 28 qui fixent le retard et la durée de la porte de mesure de façon à intéresser la mesure à un écho bien choisi du signal 19. Dans l'exemple représenté, la porte de mesure est ouverte sur le premier écho a, et laisse de côté aussi bien les échos parasites c que l'écho secondaire b ou les échos suivants éventuels.

La mesure du temps est réalisée grâce à l'horloge 33 d'abord au temps to du début du créneau de sélection, puis au temps t1 correspondant au passage du signal 19 au-delà du seuil fixé par le comparateur 30.

Cette mesure est répétée un grand nombre de fois afin d'effectuer une moyenne statistique : si on admet qu'une mesure s'effectue à 16 ns près, 256 mesures permettent d'améliorer la précision dans un facteur de $\sqrt{256} = 16$, c'est-à-dire à 1 ns près.

La mesure peut être faite sur le premier écho en retour comme décrit précédemment, mais aussi sur le N$^{\text{ième}}$; dans ce cas la variation mesurée est multipliée par N, celle-ci n'étant plus relevée sur un aller et retour de l'onde mais sur un N allers et retours.

Ce mode présente l'avantage d'être simple et surtout, ce qui est essentiel, très rapide.

Comme déjà indiqué, il présente en outre l'intérêt d'être peu sensible à la température, et d'être indifférent à l'épaisseur du milieu de couplage acoustique séparant le capteur de l'extrémité de la pièce ainsi que du câble de liaison du capteur avec l'électronique.

En revanche, il présente un inconvénient, celui de ne pas permettre de refaire une mesure lorsque l'opération a été terminée et arrêtée, étant donné qu'on n'a relevé qu'une variation relative du temps.

Rapide, peu sensible à la température, indifférent à la disparité de longueur des vis, indifférent à l'épaisseur du milieu de couplage, ce mode ainsi organisé est particulièrement adapté pour suivre en temps réel l'opération de mise en charge d'une vis, celle-ci étant réalisée manuellement ou à l'aide d'une machine dans l'ambiance hostile de l'atelier.

### 2. Mode de serrage absolu simple.

On se reporte à la figure 3. Là encore, la mesure est réalisée à partir du début du créneau de mesure.

Le signal est échantillonné à l'aide du dispositif à synchronisation retardée 31 et de l'échantillonneur convertisseur 16 fournissant le signal 34.

Le signal est repéré dans le temps à l'aide du seuil de référence fixé par le comparateur 30. A partir de cette indication, le passage à zéro du signal suivant le premier pic d'amplitude maximale est retenu. La position de cet échantillon constitue la mesure de temps recherchée.

Comme pour le mode relatif, la mesure peut être réalisée sur le premier écho en retour, mais aussi sur le N$^{\text{ième}}$ écho, afin de démultiplier par N le temps de parcours et par voie de conséquence la sensibilité de la mesure par N.

On peut aussi repérer l'écho non pas par "passage à zéro", mais par échantillonnage complet du signal et intercorrélation.

Dans le cas du repérage par "passage à zéro", le temps initial de référence To est mémorisé sous la forme d'une valeur de temps; dans l'autre cas de repérage par "échantillonnage complet du signal", le temps initial de référence To est mémorisé sous forme d'autant de valeurs de temps qu'il existe d'échantillons.

Ce mode présente l'avantage, ayant pris en compte la position absolue dans le temps de l'écho pour la vis considérée (temps de l'aller et retour de l'onde dans la vis), de permettre à tout moment de pouvoir revenir sur la vis et d'effectuer une mesure représentative de la tension.

En outre, dans le cas de l'utilisation du repérage par "échantillonnage complet du signal", il apporte une garantie sur la mesure en évitant des erreurs graves qui pourraient être commises lorsque le signal est déformé.

En revanche, il présente l'inconvénient d'être plus lent que le mode relatif.

Par ailleurs, il est sensible à la température de la pièce; en cas de variation des corrections sont nécessaires pour en tenir compte.

Enfin, les temps mesurés tiennent compte de la traversée du milieu de couplage séparant le capteur de l'extrémité de la vis.

Ce mode est adapté au contrôle du serrage lorsque le capteur ne peut pas être laissé en place sur la vis pendant le serrage, et, bien sûr, répond au besoin du contrôle périodique pour connaître l'évolution de la tension résiduelle dans la vis.

Il s'impose particulièrement, lorsqu'il n'existe qu'un seul écho en retour.

### 3. Mode absolu différentiel.

Dans ce mode, la mesure est réalisée entre le premier écho et le suivant pour connaître le temps d'aller et retour seul dans la vis (ou, en généralisant, entre le premier écho et le N$^{ième}$ écho pour connaître le temps de N-1 allers et retours seuls dans la vis).

Dans ce mode, la mesure du temps est réalisée en échantillonnant le premier écho et en cherchant à le décaler dans le temps pour le superposer sur l'écho suivant considéré.

La mesure du temps initial de référence To est mémorisé sous la forme d'une valeur.

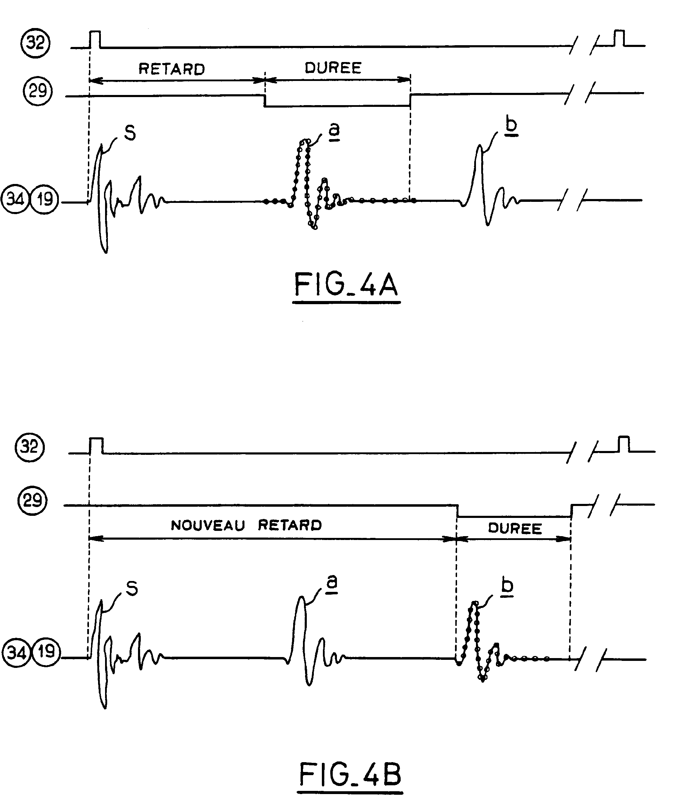

Dans un premier temps, illustré sur la figure 4A, on positionne donc le créneau de mesure sur le premier écho, qu'on échantillonne. On obtient ainsi une fonction g(t).

Dans un deuxième temps, illustré sur la figure 4B, on fixe un nouveau retard de la porte de mesure pour viser le second écho qu'on échantillonne alors, en obtenant une fonction h(t).

L'opération consiste ensuite à réaliser l'intercorrélation entre les deux signaux g(t) et h(t). Cela consiste à rechercher le décalage temporel qu'il faut faire subir à l'un des signaux pour que la superposition sur l'autre soit optimale. La "qualité" de cette superposition est définie par le coefficient d'intercorrélation C($\tau$) qui s'écrit :

$$C(\mathcal{T}) = (1/T) \int_{o}^{T} h(t) - g(t - \mathcal{T}) dt$$

et dont on cherche le maximum.

Ce mode présente l'avantage, ayant pris en compte la position absolue dans le temps du parcours réel de l'onde dans la vis considérée, de permettre à tout moment de revenir sur la vis et d'effectuer une mesure représentative de la tension.

En outre, l'utilisation du repérage par échantillonnage complet du signal apporte une garantie sur la mesure, même lorsque l'écho subit des déformations.

Enfin, il n'est pas sensible à l'effet de l'épaisseur du produit de couplage acoustique entre le capteur et l'extrémité de la vis, d'une part, et à l'effet de la transmission des signaux dans le câble de liaison entre le capteur et l'électronique de mesure, d'autre part.

En revanche, il présente l'inconvénient d'être plus lent que les deux modes précédents.

Par ailleurs, comme pour le mode absolu simple, il est sensible à la température; des corrections sont nécessaires.

Ce mode est bien adapté au contrôle du serrage lorsque le capteur ne peut pas être laissé en place sur la vis pendant le serrage et bien sûr, répond au besoin du contrôle périodique pour connaître l'évolution de la tension résiduelle dans la vis.

Ce mode constitue un moyen d'expertise idéal lorsque plusieurs échos peuvent être observés et exploités (au moins deux).

La voie de mesure disposant de ces trois modes, le serrage d'une vis peut être contrôlé par une combinaison avantageuse de ces modes, soit :

.  mode relatif et mode absolu simple lorsqu'un seul écho en retour est disponible ou

.  mode relatif et mode absolu différentiel lorsque plusieurs échos en retour sont disponibles (au moins deux).

Sur ordre de l'opérateur ou du système de gestion et de pilotage, la voie de mesure enregistre la valeur To avant le serrage, suit le serrage en mode relatif par mesure de la variation relative $\Delta t$, fournissant éventuellement cette donnée en temps réel pour les besoins de la conduite et de l'asservissement des appareils mécaniques.

Lorsque le serrage est terminé, le temps T peut être mesuré en mode absolu, pour déterminer à tout moment souhaité la tension résiduelle dans la vis.

Dans le cas d'assemblage comportant plusieurs vis, la voie de mesure est reproduite en autant d'exemplaires qu'il y a de capteurs placés sur chacune des vis.

Toutes ces voies sont pilotées et exploitées par un système de gestion central.

De cette manière, le serrage peut être conduit simultanément sur toutes les vis à la fois en adaptant les consignes et les ordres en fonction des besoins et de la situation au niveau de chaque vis.

Cette disposition présente l'avantage de serrer toutes les vis ensemble, en particulier, dans le cas de la nécessité de tenir compte de l'intéraction réciproque de l'effet du serrage d'un élément sur tous les autres.

Les avantages et la sécurité affectés par la méthode conforme à l'invention par rapport aux mesures par point vont maintenant être expliquées plus en détail.

En effet, la localisation du signal dans l'échelle des temps par un seul point présente dans un certain nombre de cas des risques d'erreur sur la mesure.

Plusieurs cas de figures peuvent être donnés à titre d'exemple.

Le premier cas est celui où la mesure est réalisée sur un signal avant et après serrage.

Il apparaît souvent lors du serrage, une déformation du signal; ceci est dû à la déformation de la vis entraînant une légère désorientation de la face réfléchissante à l'extrémité par rapport à la face d'entrée des ondes.

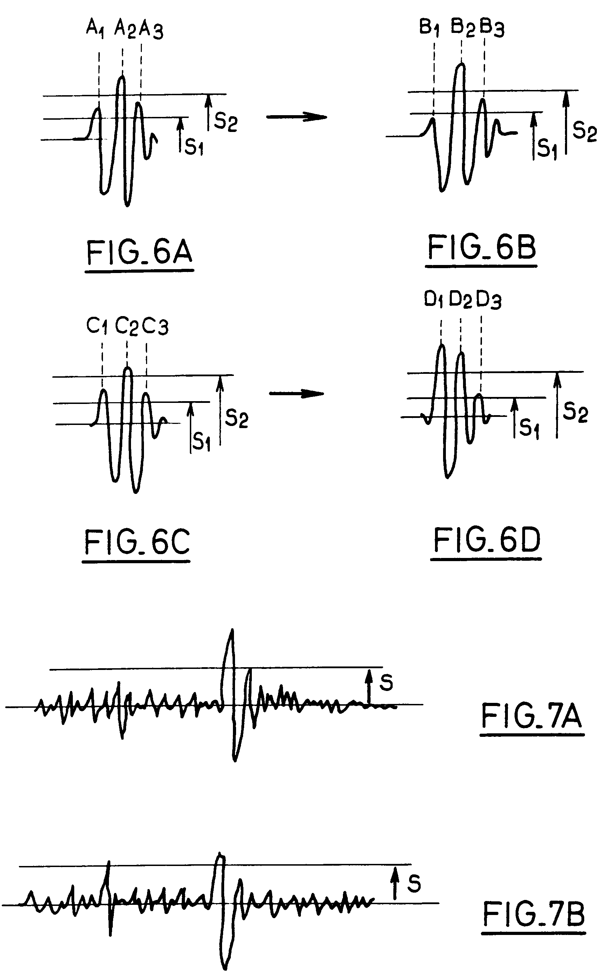

Les deux exemples présentés dans les figures 6A, 6B d'une part, 6C, 6D, d'autre part, montrent comment le signal peut évoluer.

Dans le premier cas, l'amplitude de la première arche diminue (de A1; avant serrage, elle passe à B1 après serrage) dans le second, elle augmente (passant de C1 avant serrage, à D1 après serrage). Le choix de l'arche sur laquelle la mesure est effectuée est déterminé au moyen d'un seuil; dans les exemples :

. Le seuil S1 permet de retenir la première arche

. le seuil S2 permet de retenir la deuxième arche

Il est possible d'observer que quel que soit le choix S1 ou S2, une erreur est inévitable pendant ou après le serrage.

. Pour S1, l'erreur sera commise dans le premier exemple, la mesure passera de l'arche A1 à l'arche B2.

. Pour S2, l'erreur sera commise dans le deuxième exemple, la mesure passera de l'arche C2 à l'arche D1.

Dans ces exemples, très fréquents dans la pratique, la méthode de mesure par dépassement du signal d'un seuil donné, ou par passage de l'onde à zéro, sont mises en défaut et sont inutilisables, entraînant une erreur de mesure égale à la période de l'oscillation; soit à 10 MHz une erreur de 100 ns, et à 5 MHz une erreur de 200 ns, ce qui est considérable, étant du même ordre de grandeur que l'échelle de mesure.

Un deuxième cas de figure est celui où la mesure est réalisée avec un rapport signal/bruit faible.

Certains matériaux très absorbants aux ultrasons et par conséquent également très diffusants ne permettent pas d'obtenir un rapport signal/bruit idéal.

Le signal apparent alors dans un bruit de fond qui lors du serrage peut fluctuer, comme représenté aux figures 7A et 7B respectivement.

Il est possible d'observer dans cet exemple que pour un seuil donné S, la variation du bruit de fond entraînera l'impossibilité d'effectuer valablement la mesure.

Un troisième cas de figure est celui où la mesure est réalisée en présence d'échos parasites.

La géométrie de la vis, si elle est complexe, peut faire apparaître des échos parasites dans l'échogramme,dus à la présence de rebords, chanfreins, trous, etc.

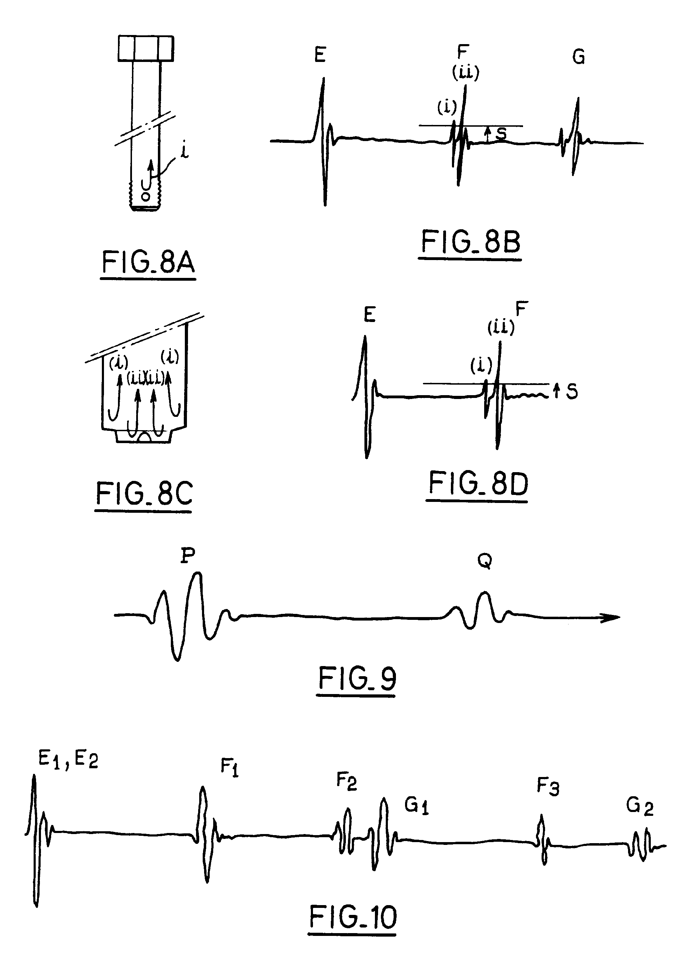

La figure 8A montre une vis percée d'un trou transversal pour goupille d'arrêt, qui va créer un signal parasite i précédant l'écho de fond ii, comme on le voit sur la figure 8B, qui montre le signal d'émission E, le premier écho F et le second écho G.

La figure 8C montre un fond de vis à rebord créant un premier signal parasite i précédant là encore le signal de fond ii, comme on le voit sur l'écho F repéré sur la figure 8D.

Dans les deux cas précédents, un écho i dû à la configuration particulière de l'extrémité de la vis précède l'écho de fond ii direct qui est en principe celui retenu pour la mesure. Si les amplitudes de ces deux échos sont comparables ou voisines, la mesure sera rendue délicate voire impossible.

Un quatrième cas de figure est celui où la mesure est réalisée sur des signaux distincts ou d'origines distinctes.

C'est le cas d'une mesure réalisée entre deux échos successifs P et Q; le second (figure 9) est naturellement plus atténué ou déformé par l'atténuation ou la disparition des composantes de fréquences élevées.

Il peut être alors extrêmement difficile de définir l'arche sur laquelle la mesure est effectuée sur l'un puis l'autre signal.

C'est encore le cas (figure 10) où le capteur émet simultanément deux types d'ondes, l'une d'élongation longitudinale (E1) et l'autre d'élongation transversale (E2);

Ces deux ondes n' ayant pas la même vitesse de propagation donnent des échos séparés (F1,F2,F3 pour les ondes longitudinales, G1,G2,... pour les ondes transversales) dont la morphologie peut être très différente.

Dans ce cas également, il peut apparaître difficile de choisir un seuil judicieux pour repérer un écho de chaque type d'onde.

La mesure par intercorrélation permet de régler en grande partie, sinon en totalité, toutes les difficultés présentées précédemment.

La superposition du signal pris en référence et du signal observé permet d'obtenir une fonction d'intercorrélation dont on cherchera le maximum; cette fonction est bien définie lorsque les signaux sont égaux ou voisins et le maximum est déterminé dans ce cas avec précision.

Lorsque les signaux sont très différents, la fonction s'aplatit, et le maximum est obtenu avec une moins bonne précision.

Bien entendu, il arrive que la superposition du signal de référence avec le signal observé donne plusieurs maximums le plus grand de ceux-ci, correspond en général à la solution recherchée.

Ce qui précède montre tout l'intérêt de la méthode proposée pou la mesure du serrage des vis, appliquée entre deux échos successifs distincts qui peuvent selon le cas :

- être d'origine différente (provenant d'une double émission);
- subir des déformations plus ou moins importantes au cours ou après le serrage;
- être situés dans un bruit important;
- être au voisinage d'échos secondaires parasites.

## Revendications

1. Appareil de contrôle de serrage d'une pièce par ultrasons, du type comportant :
   - des moyens (11) pour émettre des impulsions récurrentes périodiques dans ladite pièce,
   - des moyens (11) pour recueillir des signaux en retour,

- des moyens de mesure du temps d'apparition d'au moins un desdits signaux en retour par rapport à un évènement antérieur, ces moyens comportant des moyens de repérage d'un premier et d'un second écho en retour,
- des moyens de calcul (35) pour en déduire la valeur de serrage de la pièce,

caractérisé en ce que :

- les moyens de mesure comportent des moyens d'échantillonnage (16) desdits échos, commandés par une ligne à retard (31), de manière à échantillonner l'ensemble dudit premier écho et dudit second écho sur plusieurs récurrences successives, et des moyens d'intercorrélation (35) entre lesdits premier et second écho échantillonnés, pour servir de base au calcul de la valeur du serrage de la pièce.

2. Appareil selon la revendication 1, caractérisé en ce que les moyens de mesure comportent également des moyens (30) de repérage d'écho à comparaison de seuil.


**Patentansprüche**

1. Vorrichtung zur Prüfung der Verkeilung eines Werkstücks mittels Ultraschall, mit:
   - Einrichtungen (11) zum Aussenden von wiederkehrenden bzw. rücklaufenden periodischen Impulssignalen in das Werkstück;
   - Einrichtungen (11) zum Empfangen bzw. Aufnehmen der rückgesandten Signale;
   - Einrichtungen zum Messen der Zeit des Erscheinens wenigstens eines der rückgesandten Signale in Bezug auf ein vorhergehendes Ereignis, wobei diese Einrichtungen Mittel zur Ortung eines ersten und eines zweiten rückgesandten Echos aufweisen;
   - Recheneinrichtungen (35) zum Ableiten des Verkeilungswertes des Werkstückes,

   dadurch gekennzeichnet, daß:
   - die Einrichtungen zum Messen Mittel (16) zum Abtasten bzw. Verarbeiten der Echos aufweisen, die durch eine Verzögerungslinie (31) gesteuert werden, derart, daß sie aus dem Satz des ersten und des zweiten Echos über mehrere aufeinanderfolgende Rekursionen Momentwerte bilden, sowie Mittel (35) zum Interkorrelieren zwischen dem ersten und dem zweiten zu Momentwerten verarbeiteten Echo, um als Basis einer Berechnung des Verkeilungswertes des Werkstückes zu dienen.

2. Vorrichtung nach Anspruch 1, dadurch gekennzeichnet, daß die Einrichtungen zum Messen ebenfalls Mittel (30) zur Echoortung durch einen Schwellwertvergleich aufweisen.


**Claims**

1. An apparatus for checking the tightness of a part by ultrasonics, of the type comprising :
   - means (11) for transmitting pulses into said part,
   - means (11) for collecting return signals,
   - means for measuring the time of appearance of at least one of said return signals with respect to a prior event, said means comprising means for referencing a first return echo and a second return echo ;
   - calculating means (35) for deducing therefrom the tightness value of the part,

   characterized by the fact that :

   the measurement means comprise means (16) for sampling said echoes, controlled by a delay line (31), so as to sample all of said first echo and of said second echo on several successive recurrences, and means (35) for intercorrelating the said sampled first and second echoes, to serve as basis for the calculation of the tightness value of the part.

2. An apparatus according to claim 1, characterized by the fact that the measurement means also comprise thereshold comparison echo referencing means (30).

FIG_1

EP 0 502 071 B1

FIG. 2

FIG. 3

FIG_4A

FIG_4B

FIG.5A

FIG.5B

FIG_6A

FIG_6B

FIG_6C

FIG_6D

FIG_7A

FIG_7B

14

FIG.8A

FIG.8B

FIG.8C

FIG.8D

FIG.9

FIG.10